# EUROPEAN PATENT APPLICATION

(11) **EP 4 629 116 A1**
(43) Date of publication of application: **08.10.2025**
(21) Application number: 25165163.4
(22) Date of filing: 20.03.2025
(51) Int. Cl.: G06F 21/57, G06F 16/18, H04L 67/10, H04L 67/06

(54) **METHOD, APPARATUS, DEVICE AND MEDIUM FOR DATA TRANSMISSION IN CONTENT DELIVERY NETWORK**

(30) Priority: 21.03.2024 CN 202410330035
(71) Applicant: Beijing Volcano Engine Technology Co., Ltd., Beijing 100190 (CN)
(72) Inventor: Liu, Jiawei, Beijing, 100028 (CN); Jiang, Yisheng, Beijing, 100028 (CN); Wang, Jian, Beijing, 100028 (CN)
(74) Representative: Grünecker Patent- und Rechtsanwälte PartG mbB

(57) **Abstract**

Embodiments of the disclosure provide methods, apparatuses, an electronic device, and a computer-readable medium for data transmission in a content delivery network. The method includes: generating a target orchestration script, where the target orchestration script includes an instruction to be executed by the content delivery network; transmitting the target orchestration script to a server of the content delivery network; and obtaining, from the server, a first log of the target orchestration script executed in a corresponding trusted execution environment of a plurality of edge devices in the content delivery network. In this way, a user can ensure the security of a content transmission process when using a content delivery network service.

## Description

### FIELD

Example embodiments of the present disclosure generally relate to digital protection, and in particular, to a method, an apparatus, a device, and a computer-readable storage medium for data transmission in a content delivery network.

### BACKGROUND

Content transmission exists widely in various applications. A user may perform a content access operation in a client application, for example, read news. After receiving a content access request from the client, a server may transmit the content to the client through a content delivery network (CDN), also known as a content distribution network, so that the user can view the content. In the process of content transmission, it is often necessary to overcome the problem of low transmission efficiency during a network peak time or when the network is unstable, and it is expected to achieve efficient content transmission. By using the content delivery network, the content transmission can be faster and more stable. In the process of content transmission through the content delivery network, it is necessary to ensure the security of content transmission.

### SUMMARY

In a first aspect of the present disclosure, a method for data transmission in a content delivery network is provided. The method includes: generating, at a client device, a target orchestration script, where the target orchestration script includes an instruction to be executed by the content delivery network; transmitting the target orchestration script to a server of the content delivery network; and obtaining, from the server, a first log of the target orchestration script executed in a corresponding trusted execution environment of a plurality of edge devices in the content delivery network.

In a second aspect of the present disclosure, a method for data transmission in a content delivery network is provided. The method includes: receiving, at a server of the content delivery network, a target orchestration script from a client device, where the target orchestration script includes an instruction to be executed by the content delivery network; distributing the target orchestration script to a plurality of edge devices in the content delivery network; receiving, from the plurality of edge devices, a first log of the target orchestration script executed in a corresponding trusted execution environment of the plurality of edge devices; and providing the first log to the client device.

In a third aspect of the present disclosure, a method for data transmission is provided. The method includes: receiving, at an edge device of a content delivery network, a target orchestration script from a server of the content delivery network, where the target orchestration script includes an instruction to be executed by the content delivery network; executing the target orchestration script in a trusted execution environment; generating, in the trusted execution environment, a first log of the target orchestration script executed; and transmitting the first log to the server.

In a fourth aspect of the present disclosure, a method for data transmission in a content delivery network is provided. The method includes: receiving, at a log database, first logs of a target orchestration script executed in a corresponding trusted execution environment of a plurality of edge devices in the content delivery network from the plurality of edge devices; storing the received first logs in chronological order; and providing a second log of at least one orchestration script executed in the corresponding trusted execution environment of the plurality of edge devices to a client device, where the at least one orchestration script is provided by the client device, and the at least one orchestration script includes the target orchestration script.

In a fifth aspect of the present disclosure, an apparatus for data transmission is provided. The apparatus includes: a script generating module configured to generate a target orchestration script, where the target orchestration script includes an instruction for a content delivery network to execute; a script transmitting module configured to transmit the target orchestration script to a server of the content delivery network; and a log obtaining module configured to obtain, from the server, a first log of the target orchestration script executed in a corresponding trusted execution environment of a plurality of edge devices in the content delivery network.

In a sixth aspect of the present disclosure, an apparatus for data transmission in a content delivery network is provided. The apparatus includes: a first script receiving module configured to receive a target orchestration script from a client device, where the target orchestration script includes an instruction to be executed by the content delivery network; a script distributing module configured to distribute the target orchestration script to a plurality of edge devices in the content delivery network; a first log receiving module configured to receive a first log of the target orchestration script executed in a corresponding trusted execution environment of the plurality of edge devices from the plurality of edge devices; and a log providing module configured to provide the first log to the client device.

In a seventh aspect of the present disclosure, an apparatus for data transmission in a content delivery network is provided. The apparatus includes: a second script receiving module configured to receive a target orchestration script from a server of the content delivery network, where the target orchestration script includes an instruction to be executed by the content delivery network; a script executing module configured to execute the target orchestration script in a trusted execution environment; a log generating module configured to generate, in the trusted execution environment, a first log of the target orchestration script executed; and a log transmitting module configured to transmit the first log to the server.

In an eighth aspect of the present disclosure, an apparatus for data transmission in a content delivery network is provided. The apparatus includes: a second log receiving module configured to receive first logs of a target orchestration script executed in a corresponding trusted execution environment of a plurality of edge devices in the content delivery network from the plurality of edge devices; a log storing module configured to store the received first logs in chronological order; and a log providing module configured to provide a second log of at least one orchestration script executed in the corresponding trusted execution environment of the plurality of edge devices to a client device, where the at least one orchestration script is provided by the client device, and the at least one orchestration script includes the target orchestration script.

In a ninth aspect of the present disclosure, an electronic device is provided. The electronic device includes at least one processing unit and at least one memory. The at least one memory is coupled to the at least one processing unit and stores instructions executable by the at least one processing unit. The instructions, when executed by the at least one processing unit, cause the electronic device to perform the method according to the first aspect, the second aspect, the third aspect, or the fourth aspect of the present disclosure.

In a tenth aspect of the present disclosure, a computer-readable storage medium is provided. A computer program is stored on the computer-readable storage medium. The computer program is executable by a processor to perform the method according to the first aspect, the second aspect, the third aspect, or the fourth aspect of the present disclosure.

It should be understood that the content described in this section is not intended to limit the key features or important features of the embodiments of the present disclosure, nor is it intended to limit the scope of the present disclosure. Other features of the present disclosure will become readily understood through the following description.

### BRIEF DESCRIPTION OF THE DRAWINGS

Hereinafter, the above and other features, advantages and aspects of various implementations of the present disclosure will become more apparent with reference to the drawings and the following detailed description. In the drawings, the same or similar reference numerals denote the same or similar elements, where:
FIG. 1 is a schematic diagram of an example environment in which embodiments of the present disclosure can be implemented;
FIG. 2 is a schematic flowchart of a content transmission process according to some embodiments of the present disclosure;
FIG. 3 is a flowchart of a method for data transmission in a content delivery network according to some embodiments of the present disclosure;
FIG. 4 is a flowchart of a method for data transmission in a content delivery network according to other embodiments of the present disclosure;
FIG. 5 is a flowchart of a method for data transmission in a content delivery network according to still other embodiments of the present disclosure;
FIG. 6 is a flowchart of a method for data transmission in a content delivery network according to yet other embodiments of the present disclosure;
FIG. 7 is a schematic block diagram of an apparatus for data transmission in a content delivery network according to some embodiments of the present disclosure;
FIG. 8 is a schematic block diagram of an apparatus for data transmission in a content delivery network according to other embodiments of the present disclosure;
FIG. 9 is a schematic block diagram of an apparatus for data transmission in a content delivery network according to still other embodiments of the present disclosure;
FIG. 10 is a schematic block diagram of an apparatus for data transmission in a content delivery network according to yet other embodiments of the present disclosure; and
FIG. 11 is a block diagram of an electronic device capable of implementing one or more embodiments of the present disclosure.

### DETAILED DESCRIPTION

Embodiments of the present disclosure will be described in more detail below with reference to the drawings. Although some embodiments of the present disclosure are shown in the drawings, it should be understood that the present disclosure can be implemented in various forms and should not be construed as limited to the embodiments set forth herein. Rather, these embodiments are provided for a more thorough and complete understanding of the present disclosure. It should be understood that the drawings and embodiments of the present disclosure are only for illustrative purposes and are not intended to limit the protection scope of the present disclosure.

In the description of the embodiments of the present disclosure, the term "include/include" and similar terms should be understood as open-ended inclusions, that is, "include/include but not limited to". The term "based on" should be understood as "at least partially based on". The term "an embodiment" or "the embodiment" should be understood as "at least one embodiment". The term "some embodiments" should be understood as "at least some embodiments". Other explicit and implicit definitions may also be included below.

The term "in response to" means that a corresponding event occurs or a condition is satisfied. It should be understood that the execution timing of the subsequent action performed in response to the event or condition is not necessarily strongly associated with the time when the event occurs or the condition is satisfied. In some cases, the subsequent action may be performed immediately when the event occurs or the condition is satisfied; in other cases, the subsequent action may be performed after a period of time since the event occurred or the condition was satisfied.

It should be understood that data (including but not limited to the data itself, the acquisition or use of the data) involved in the technical solutions of the present disclosure should comply with the requirements of corresponding laws, regulations and related provisions.

It should be understood that before using the technical solutions disclosed in the embodiments of the present disclosure, the user should be informed of the type, scope of use, use scenarios, etc. of personal information involved in the present disclosure in an appropriate manner according to relevant laws and regulations, and the user's authorization should be obtained.

For example, in response to receiving an active request from a user, prompt information is sent to the user, to clearly inform the user that the operation requested to be performed will require the acquisition and use of the user's personal information, so that the user can choose whether to provide the personal information to software or hardware, such as an electronic device, an application, a server, or a storage medium, that performs the operation of the technical solution of the present disclosure, based on the prompt information.

As an optional but non-limiting implementation, the manner of sending prompt information to the user in response to receiving the user's active request may be, for example, a pop-up window, and the prompt information may be presented in text in the pop-up window. In addition, the pop-up window may also include a selection control for the user to select "agree" or "disagree" to provide personal information to the electronic device.

It should be understood that the above process of notifying and obtaining user authorization is only illustrative and does not limit the implementations of the present disclosure, and other methods that meet relevant laws and regulations may also be applied to the implementations of the present disclosure.

For open environments for various types of electronic devices, security issues are getting more and more attention, not only from end users, but also from service providers, mobile operators, and chip manufacturers. A trusted execution environment (Trusted Execution Environment, TEE) is a hardware-based security mechanism that loads code and data participating in computing into a trusted environment protected by a central processing unit (CPU) and provides protection for the code and data in terms of confidentiality and integrity. Compared with an operating system, a trusted execution environment can provide a higher level of security, and therefore is suitable for processing sensitive data in the trusted execution environment. At present, instruction set architectures used by the mainstream TEE technology mainly include the X86 instruction set architecture and the ARM instruction set architecture.

A content delivery network (CDN) is a system that aims to optimize Internet content transmission through technical means such as network acceleration, content caching, and load balancing. It can effectively improve the website access speed, enhance the stability of data transmission, and reduce the burden on the origin server.

However, the original script engine of the content delivery network has always had potential trust issues, especially when processing user-sensitive data and executing critical business logic, and this risk is particularly evident. The content delivery network generates a service log when processing user-sensitive data and executing critical business logic, but a client cannot determine whether its orchestration script is scheduled and executed according to existing logic based on the service log. Moreover, the content delivery network service cannot prove that semantics (such as an edge script) of its edge node are executed. Because the edge node has a large number of possibilities of being attacked.

Therefore, some embodiments of the present disclosure provide a data transmission solution in a content delivery network. In this solution, after a client device generates a target orchestration script that includes an instruction to be executed by the content delivery network, the client device transmits the target orchestration script to a server of the content delivery network. The server distributes the target orchestration script to a plurality of edge devices in the content delivery network. Each edge device executes the target orchestration script in a trusted execution environment and generates a corresponding execution log. After the edge device transmits the log to the server, the server transmits the log to the client device.

By allowing the client device to directly upload the orchestration script, the CDN service can respond to the needs of the client faster, improving the overall efficiency and response speed of the service. By running the script at the edge node in the TEE, it can be ensured that the execution of the script will not be affected even if the edge node is attacked, thereby improving the reliability of the entire CDN service. By recording and feeding back the execution log, the client device may be provided with feedback on its content distribution, improving the user experience. This solution not only improves the performance of the CDN service, but also improves the experience of the end user.

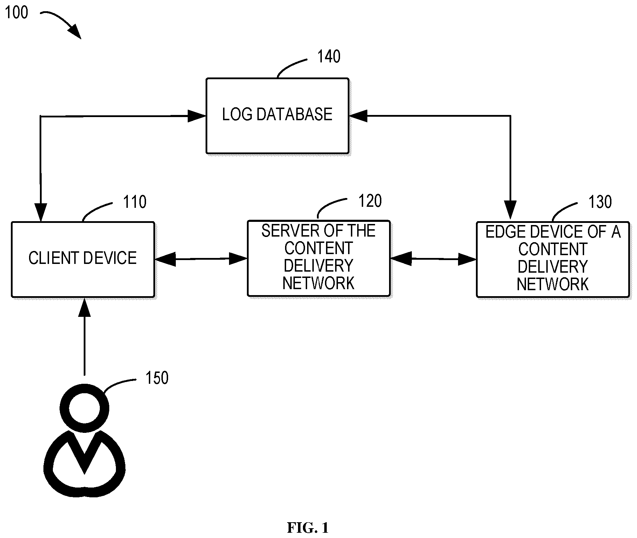

FIG. 1 is a schematic diagram of an example environment 100 in which embodiments of the present disclosure can be implemented.

As shown in FIG. 1, the environment 100 includes a client device 110. The client 110 may send a request for content to a server 120 of a content delivery network. The content may be data that a user 150 needs to access via the client device 110 or any other suitable content.

The client device 110 may be any type of device, including virtual and physical devices. As an example, the client device 110 may include, but is not limited to, a mobile device, a fixed device, or a portable device, etc., including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a positioning device, a television receiver, a radio broadcast receiver, an e-book device, a virtual reality (VR) all-in-one machine, a game console, a gaming laptop, or any combination thereof, including accessories and peripherals of these devices or any combination thereof. In some embodiments, the client device 110 may also support any type of interface for the user (such as a "wearable" circuit, etc.).

The environment 100 further includes a server 120 of the content delivery network, which may be used to provide corresponding content accessed by the client device 110. A content delivery network is an intelligent virtual network built on the basis of existing networks. Relying on edge servers deployed in various locations, users can obtain required content locally through load balancing, content delivery, scheduling, and other function modules of a central platform, which can reduce network congestion and improve the user access response speed and hit rate.

The server 120 may be implemented by any type of device, including virtual and physical devices. An example of such a device may include, but is not limited to, a mainframe, an edge computing node, a rack server, a router computer, a server computer, a personal computer, a mainframe computer, a laptop computer, a tablet computer, a desktop computer, and the like. In some embodiments, the device may include a virtual machine, a container, or a bare metal server.

The environment 100 further includes an edge device 130 of the content delivery network, which may be an edge node or an edge server in the content delivery network. A script or program may run on the edge node 130 of the content delivery network, which may be called an edge script of the content delivery network. The edge script can implement more complex and customized processing during the content delivery process. This method can enhance the traditional caching and distribution functions of the content delivery network, and provide higher-level content processing and optimization capabilities.

The edge device 130 of the content delivery network may be implemented by any type of device, including virtual and physical devices. An example of such a device may include, but is not limited to, a mainframe, an edge computing node, a rack server, a router computer, a server computer, a personal computer, a mainframe computer, a laptop computer, a tablet computer, a desktop computer, and the like. In some embodiments, the device may include a virtual machine, a container, or a bare metal server.

The environment 100 further includes a log database 140, which may be used to store log data generated when an application on a device in the content delivery network runs. Recording log information is convenient for meeting the needs of problem troubleshooting, performance optimization, security auditing, etc., and can meet the requirements of large-scale, efficient, and reliable log storage and query. The log database may be implemented by using any database technology, and the scope of the present disclosure is not limited in this aspect.

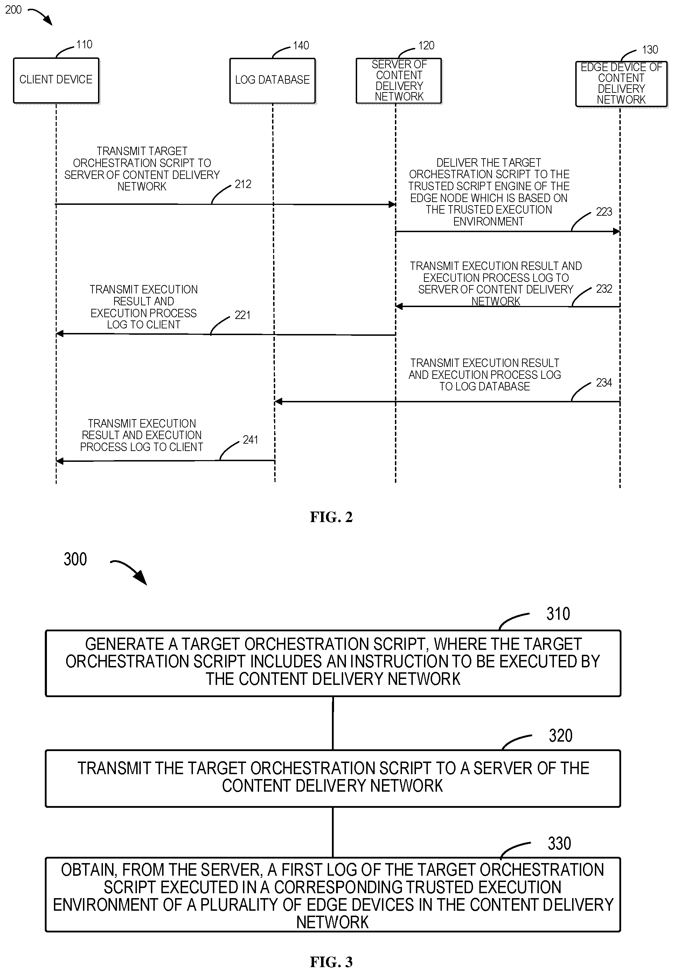

In the environment 100, the client device 110 may create an orchestration script. The orchestration script may be transmitted to the edge device 130 through the server 120, for the edge device 130 to execute. An example process of script transmission and execution is described below with reference to FIG. 2.

As shown in FIG. 2, the client device 110 transmits (212) a target orchestration script to the server 120 of the content delivery network. The server 120 of the content delivery network delivers (223) the target orchestration script to the trusted script engine of the edge node, where the trusted script engine is based on the trusted execution environment. The trusted script engine completes the execution of the target orchestration script in the trusted execution environment, and transmits (232, 234) the execution result and the execution process log to the server 120 of the content delivery network and the log database 140, respectively. The server 120 of the content delivery network then transmits (221) the execution result and the execution process log to the client device 110. The log database 140 also transmits (241) the execution result and the execution process log to the client device 110.

Some example embodiments of the present disclosure are described below with reference to FIG. 3 to FIG. 6.

FIG. 3 is a flowchart of a method 300 for data transmission according to some embodiments of the present disclosure. The method 300 may be performed at the client device 110. For ease of discussion, the method 300 will be described with reference to the environment 100 of FIG. 1.

In some embodiments, at block 310, the client device 110 generates a target orchestration script, where the target orchestration script includes an instruction to be executed by the content delivery network. For example, a client service generates a target orchestration script, the target orchestration script may include, for example, a content distribution logic, a specific cache policy, or an instruction for handling a specific request (such as a security requirement), and these included objects are collectively referred to as instructions for the content delivery network to execute.

At block 320, the client device 110 transmits the target orchestration script to the server 120 of the content delivery network. By transmitting the target orchestration script to the content delivery network, the client device 110 may directly control the behavior of the content delivery network and implement a personalized and customized content distribution strategy, thereby improving the flexibility and efficiency of the content delivery network service. In addition, this process also lays the foundation for subsequent security verification.

In some embodiments, the target orchestration script is transmitted to the server 120 through a secure file transfer protocol or an application programming interface call. The uploading process of the target orchestration script is completed through a secure file transfer protocol (SFTP) or an application programming interface (API), which improves security.

In some embodiments, the client device 110 may encrypt the target orchestration script. In the uploading process, it is essential to ensure the security of data transmission. The client device 110 may transmit the encrypted target orchestration script to the server 120. Generally, encryption technology is used to protect the data in the transmission process from being intercepted or tampered with. The encryption technology may be, for example, a secure transmission protocol (TLS) or a secure socket layer (SSL). The CDN service provider needs to verify the identity of the user and ensure that only authorized users can upload the script. This is usually achieved through API keys, OAuth (an open protocol) tokens, etc.

In some embodiments, the client device 110 may send, to the server 120, a request for transmitting the target orchestration script, and receive, from the server 120, a response to the request for transmitting the target orchestration script. For example, when transmitting the target orchestration script to the server 120, the client device 110 needs to send a related request to the server 120, and the server 120 will receive a related response.

At block 330, the client device 110 obtains, from the server 120, a first log of the target orchestration script executed in a corresponding trusted execution environment of a plurality of edge devices in the content delivery network. For example, the content delivery network has multiple corresponding edge devices, each edge device is configured with a trusted execution environment, and the target orchestration script is securely transmitted to the trusted execution environment of each edge node and executed in the trusted execution environment. The trusted execution environment provides an isolated and secure environment for the execution of the target orchestration script, preventing external attacks and data leakage. The use of the trusted execution environment technology significantly enhances the security of edge computing. This approach can effectively defend against external attacks and internal threats and protect sensitive business logic and user data.

The first log may be obtained after the target orchestration script is executed in the trusted execution environment of the edge device 130. The first log may be transmitted from the edge device 130 to the server 120 and stored in the server 120. The first log includes an execution result and an execution process log.

In some embodiments, the client device 110 may send, to the server 120, a request to access the first log. The first log is accessible and transparent. The client device 110 may obtain the first log from the server 120 in response to sending the request to access the first log. By accessing the first log, the client device 110 can obtain detailed information about the execution of the orchestration script. This provides transparency of the operation, enabling the user to have a deep understanding of the execution of the content delivery network service.

In some embodiments, the client device 110 may obtain, from the log database 140, a log (referred to as "second log") for execution of at least one orchestration script in the corresponding trusted execution environment of the plurality of edge devices, where the at least one orchestration script is provided by the client device 110, and the at least one orchestration script includes the target orchestration script. For example, after completing the execution of the orchestration script in the trusted execution environment, the orchestration script sends the first log containing the execution result and the execution process to the server 120, and sends the second log containing the execution result and the execution process to the log database 140. This process not only ensures the security of the execution, but also provides transparency and traceability through detailed logging, which is convenient for the user and the service provider to verify and audit when necessary.

In some embodiments, the client device 110 may send, to the log database 140, a request to access the second log. The client device 110 has the access permission to the log database 140. The client device 110 may obtain the second log from the log database 140 in response to sending the request to access the second log. The log database 140 provides a chronologically ordered log database storage service, and transmits the second log to the client device 110. Therefore, the chronologically ordered log database storage service provides the user with another way to receive the execution log. These logs are stored chronologically, which is convenient for long-term data analysis and trend prediction.

By providing such an independent and reliable log storage and retrieval system as the log database 140, the availability and integrity of data are increased. This is essential for ensuring long-term data security and compliance.

In some embodiments, the client device 110 may send, to the log database 140, a request to access the second log in response to receiving a query request from the user for the second log. By opening the query request for the second log to the user, the client device 110 can significantly improve the user's trust and satisfaction, because it increases transparency and provides a powerful tool to support the user's business operations.

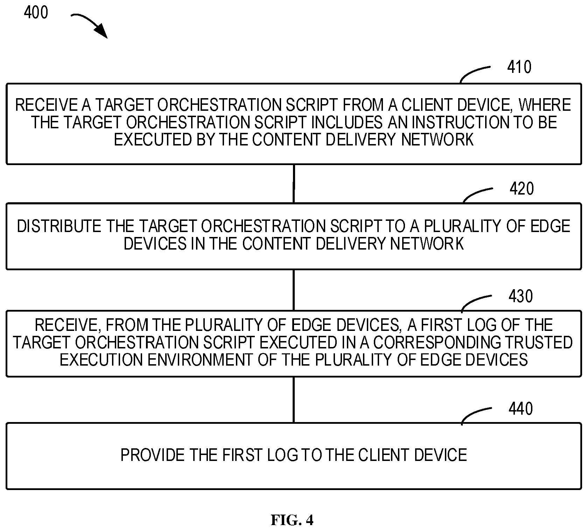

FIG. 4 is a flowchart of a method 400 for data transmission according to some embodiments of the present disclosure. The method 400 may be performed at the server 120 of the content delivery network. For ease of discussion, the method 400 will be described with reference to the environment 100 of FIG. 1.

At block 410, the server 120 receives a target orchestration script from the client device 110, where the target orchestration script includes an instruction to be executed by the content delivery network. The server 120 of the content delivery network receives the target orchestration script including the instruction to be executed by the content delivery network from the client device 110, which means that the user is allowed to upload the custom script, which brings great flexibility and personalization to the content delivery network service. Users can optimize content distribution according to their specific needs and strategies.

In some embodiments, the target orchestration script may be received through the secure file transfer protocol or the application programming interface call. Therefore, the security of the target orchestration script can be ensured.

In some embodiments, the received target orchestration script may be an encrypted target orchestration script. By encrypting the target orchestration script, its security is further ensured. The server 120 may decrypt the received target orchestration script. The server 120 of the content delivery network has a tool for decrypting the target orchestration script. That is, by encrypting and decrypting the target orchestration script before and after the transmission, the security of the target orchestration script is significantly improved, preventing it from being intercepted or tampered with during the transmission process.

In some embodiments, the server 120 may receive, from the client device 110, a request for transmitting the target orchestration script. The server 120 may verify the identity of the user of the client device 110 (referred to as "first verification"). In response to the first verification being successful, the server 120 may send, to the client device 110, a response to the request for transmitting the target orchestration script. For example, before the server 120 of the content delivery network receives the target orchestration script, it first receives a transmission request for the target orchestration script from the client device 110, and needs to verify the identity of the user of the client device 110, that is, perform the first verification process.

If the first verification fails, the server 120 of the content delivery network does not receive the target orchestration script. If the first verification succeeds, the server 120 of the content delivery network receives the target orchestration script and sends a corresponding transmission response to the client device 110, to indicate that the target orchestration script is received.

At block 420, the server 120 distributes the target orchestration script to a plurality of edge devices in the content delivery network. For example, each edge device is configured with a trusted execution environment, and can provide a trusted script engine service based on the TEE. The TEE provides a secure execution environment, protecting the script from interference from other software, especially attacks from the operating system level. This is essential for executing scripts containing sensitive logic or data processing.

The script engine of the edge device in the content delivery network is an advanced feature of the content delivery network technology, allowing users to write and run custom scripts or code on the edge nodes of the content delivery network. This technology can perform real-time data processing and decision-making at the forefront of content delivery, which greatly improves the flexibility and functionality of the content delivery network.

In some embodiments, the server 120 may verify the received target orchestration script (referred to as "second verification"). After receiving the target orchestration script, the server 120 of the content delivery network performs the second verification on it, to ensure that it does not contain malicious code and instructions that do not comply with strategies. In response to the second verification being successful, the server 120 may distribute the target orchestration script to the plurality of edge devices. After the second verification, if the result is "pass", the server of the content delivery network distributes the target orchestration script to the plurality of edge devices; if the result is "fail", the server 120 of the content delivery network does not distribute the target orchestration script to the plurality of edge devices.

In some embodiments, the server 120 may convert the received target orchestration script into a script having a format suitable for the plurality of edge devices to execute. For example, the server 120 of the content delivery network may further process the target orchestration script, for example, compile or convert it into a format suitable for execution at the edge node. The server 120 may distribute the converted target orchestration script to the plurality of edge devices. For example, after the target orchestration script completes the format conversion, the server 120 may distribute it to the plurality of edge devices, so that it can be smoothly executed in the trusted execution environment of the edge device, which is beneficial to improving the execution efficiency.

In some embodiments, the server 120 may transmit multiple copies of the target orchestration script to the edge devices, respectively. The server 120 of the content delivery network may distribute the received target orchestration script to its globally distributed edge nodes, which usually involves copying the target orchestration script to multiple servers to ensure that the content is geographically close to the end user, thereby reducing the latency. In addition, the distribution process needs to ensure that all edge nodes are updated to the latest script version synchronously to maintain the consistency of the service.

In some embodiments, the target orchestration script is distributed to the plurality of edge devices through the secure file transfer protocol. In some embodiments, the server 120 may encrypt the target orchestration script. The server 120 may distribute the encrypted target orchestration script to the plurality of edge devices. In addition to ensuring the security of the target orchestration script in the above transmission process, it is also necessary to ensure the security of the target orchestration script when it is distributed to each edge device. Therefore, encrypting the target orchestration script and then distributing it to the plurality of edge devices further ensures its security.

At block 430, the server 120 receives first logs of the target orchestration script executed in the corresponding trusted execution environment of the plurality of edge devices from the plurality of edge devices. The TEE ensures that the execution process and data of the script are isolated from the main operating system, providing a secure "trust zone". The trusted script engine is responsible for interpreting and executing the target orchestration script delivered to the edge node. It runs within the TEE, ensuring the security of the execution environment. The trusted script engine can also handle various requests from the script, such as data processing, content caching, and distribution decision-making. The The use of the TEE technology significantly improves the security of the target orchestration script executed by the edge node. By running the script in the TEE, it can be ensured that the execution of the script will not be affected even if the edge node is attacked, thereby improving the reliability of the entire content delivery network service.

In some embodiments, the received first log may be an encrypted first log. For example, the first log of the edge device received by the content delivery network server is encrypted, which is secure and reliable.

At block 440, the server 120 provides the first log to the client device 110.

The CDN server 120 may first collect results of executing the script and related logs from its edge nodes 130. This includes detailed information of the script execution, such as a timestamp, an execution state, generated output, and any exception or error information. The log data may need to be processed and integrated to ensure that they are clear and useful to the user. For example, the raw logs may need to be formatted or aggregated for ease of understanding.

The CDN service provider may provide these logs to the client device 110 in various ways. For example, the logs may be provided through an API, a file transfer protocol (FTP) server, or a log viewing function integrated in its management console.

In some embodiments, the server 120 may receive, from the client device 110, a request to access the first log. In response to receiving the request to access the first log, the server 120 may provide the first log to the client device 110. In the execution process of the target orchestration script, all operations and events are recorded in detail in the first log. This includes each step of script execution, decisions made, data processed, and any exceptions. The first log is essential for subsequent review and analysis, and they provide a comprehensive view of the execution process. Therefore, the server 120 of the content delivery network providing the client device 110 with access to the first log improves the user experience.

In some embodiments, the user may access these logs in real time, which is essential for monitoring the execution of their orchestration script and understanding the performance of the CDN service. Through these logs, the user can obtain direct feedback on the content distribution performed by them and determine aspects that need to be optimized or adjusted. The log data provides the user with content for analyzing the effect of the CDN service, optimizing the script and strategy, etc. Through the logs, the user can better understand the needs and behaviors of the user group, thereby improving the efficiency and effectiveness of content distribution.

By providing the execution log, the CDN service increases the transparency of the operation, enabling the user to better understand and monitor the operation of the service. By analyzing the log, the user can identify and solve problems faster, and can adjust the CDN configuration to improve efficiency or respond to specific user behavior patterns. Thereby, the performance of the CDN service can be improved and the user experience can also be improved.

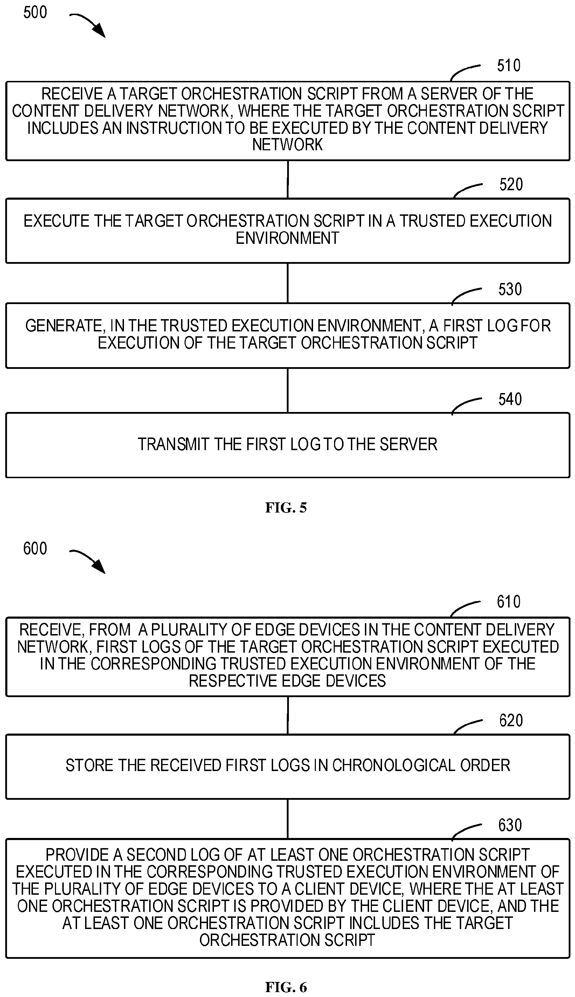

FIG. 5 is a flowchart of a method 500 for data transmission in a content delivery network according to some embodiments of the present disclosure. The method 500 may be performed at the edge device 130 of the content delivery network. For ease of discussion, the method 500 will be described with reference to the environment 100 of FIG. 1.

At block 510, the edge device 130 receives the target orchestration script from the server 120 of the content delivery network, where the target orchestration script includes an instruction to be executed by the content delivery network. At block 520, the edge device 130 executes the target orchestration script in the trusted execution environment. At block 530, the edge device 130 generates, in the trusted execution environment, the first log of the target orchestration script executed. At block 540, the edge device 130 transmits the first log to the server 120.

Executing the script in the TEE and generating the log ensure the integrity and confidentiality of the data. Even if the edge device 130 is attacked, it can be ensured that the data will not be tampered with or leaked. The application of the TEE technology can also optimize the performance of the edge node, because it provides a dedicated environment for executing the user's target orchestration script, thereby avoiding potential conflicts with other system processes.

In some embodiments, the received target orchestration script may be an encrypted target orchestration script. The edge device 130 may decrypt the received target orchestration script. In some embodiments, the edge device 130 may transmit the first log to the log database 140. In some embodiments, the edge device 130 may encrypt the first log. The edge device 130 may transmit the encrypted first log. As mentioned above, the security of the target orchestration script and the first log is greatly ensured through encryption.

In some embodiments, the target orchestration script may be executed in the trusted execution environment by the trusted script engine. In the trusted script engine based on the TEE, the target orchestration script is executed securely. As an isolated execution environment, the TEE ensures that the execution of the script is not affected by external attacks or other parts of the system. This execution method is particularly suitable for processing sensitive data or executing critical business logic, because it can effectively prevent data leakage or unauthorized access. The TEE provides a hardware-level security protection, which means that even if the operating system is attacked, the execution environment of the script is still secure. By executing the script in this environment, the integrity of the execution logic and the confidentiality of the data can be guaranteed.

The edge device 130 provides transparency and traceability for the content delivery network service by recording a detailed execution process log and sending it to the CDN server 120 and the log database 140. The user can verify whether the script is executed as expected, and the service provider can demonstrate the reliability and security of its service. For example, the CDN service provider can better monitor the performance and security of its service, and timely detect and respond to potential problems through detailed recording and analysis of the execution log. This is very important for compliance requirements, security review, and troubleshooting.

FIG. 6 is a flowchart of a method 600 for data transmission in a content delivery network according to some embodiments of the present disclosure. The method 600 may be performed at the log database 140. For ease of discussion, the method 600 will be described with reference to the environment 100 of FIG. 1.

At block 610, the log database 140 receives first logs of the target orchestration script executed in a corresponding trusted execution environment of a plurality of edge devices in the content delivery network from the plurality of edge devices. A log may record the execution process of the orchestration script in detail, including a timestamp, an execution result, any exception or error information.

At block 620, the log database 140 stores the received first logs in chronological order. After the execution at the edge device is completed, the obtained first log is securely sent to the log database 140. In some embodiments, the log database 140 may include a chronologically ordered log database. Storing the first log in chronological order is convenient for historical data tracing and trend analysis.

In some embodiments, the log database 140 may encrypt the received first logs. The log database 140 may store the encrypted first logs. The transmission of the first logs involves encrypted transmission to ensure the security of the transmission in the network. Correspondingly, the log database 140 stores the encrypted first logs. The log database 140 ensures the integrity and security of the data. These log data are stored in an encrypted manner, which can prevent unauthorized access and data leakage.

In some embodiments, the stored first logs may be unchangeable. Therefore, the database may also implement the immutability of the log, that is, the written data cannot be changed, thereby preventing tampering and ensuring the authenticity of the log. Therefore, the chronologically ordered log database provides a way to store and analyze these data in the long term.

At block 630, the log database 140 provides a second log of at least one orchestration script executed in the corresponding trusted execution environment of the plurality of edge devices to the client device 110, where the at least one orchestration script is provided by the client device 110, and the at least one orchestration script includes the target orchestration script. For example, the log database 140 transmits a log containing the execution result and process (that is, the second log) to the client device 110.

In some embodiments, the log database 140 may receive, from the client device 110, a request to access the second log. The log database 140 may provide the second log to the client device 110 in response to receiving the request to access the second log. In order to improve the user experience, the client device 110 has the access permission to the second log.

Therefore, the user can access the log database 140 to obtain detailed information about the execution of the orchestration script. This provides the transparency of the operation, enabling the user to understand the execution of the CDN service. This access may be provided through an API or a dedicated query interface, enabling the user to retrieve and analyze the log data as needed.

In some embodiments, the log database 140 may support long-term data storage. Long-term storage, management and analysis of execution logs are allowed, thereby ensuring the integrity and security of data. In this way, the user can perform historical data analysis and trend and pattern recognition. Thereby, the CDN strategy can be optimized, thereby improving the service efficiency and adjusting business decisions.

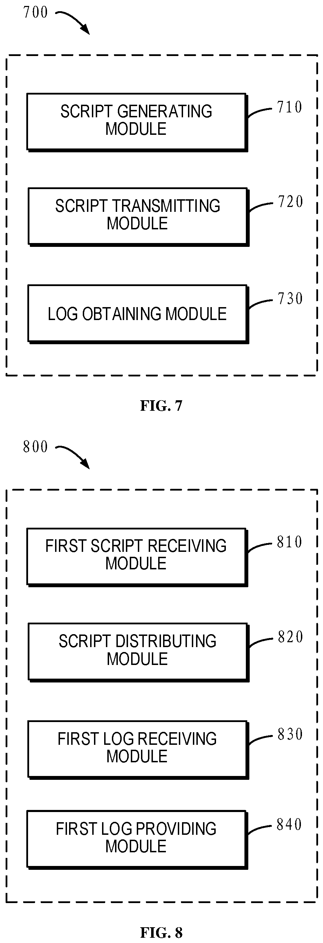

FIG. 7 is a schematic block diagram of an apparatus 700 for data transmission according to some embodiments of the present disclosure. The apparatus 700 may be implemented at the client device 110 in FIG. 1. The modules/components in the apparatus 700 may be implemented by hardware, software, firmware, or any combination thereof.

As shown in FIG. 7, the apparatus 700 includes a script generating module 710, a script transmitting module 720, and a log obtaining module 730. The script generating module 710 is configured to generate a target orchestration script, where the target orchestration script includes an instruction to be executed by the content delivery network. The script transmitting module 720 is configured to transmit the target orchestration script to the server 120 of the content delivery network. The log obtaining module 730 is configured to obtain, from the server, a first log of the target orchestration script executed in a corresponding trusted execution environment of a plurality of edge devices in the content delivery network.

In some embodiments, the apparatus 700 may include a call module configured to transmit the target orchestration script to the server through a secure file transfer protocol or an application programming interface call.

In some embodiments, the apparatus 700 may include a first script encryption module configured to encrypt the target orchestration script. The script transmitting module 720 may also be configured to transmit the encrypted target orchestration script to the server.

In some embodiments, the apparatus 700 may include a request response module configured to send, to the server, a request for transmitting the target orchestration script; and receive, from the server, a response to the request for transmitting the target orchestration script.

In some embodiments, the apparatus 700 may include a first log access module configured to send, to the server, a request to access the first log. The log obtaining module 730 is also configured to obtain the first log from the server in response to sending the request to access the first log.

In some embodiments, the log obtaining module 730 may also be configured to obtain, from the log database 140, a second log of at least one orchestration script executed in the corresponding trusted execution environment of the plurality of edge devices, where the at least one orchestration script is provided by the client device 110, and the at least one orchestration script includes the target orchestration script.

In some embodiments, the apparatus 700 may include a second log access module configured to send, to the log database 140, a request to access the second log. The second log obtaining module is also configured to obtain the second log from the log database 140 in response to sending the request to access the second log.

In some embodiments, the second log access module is also configured to send, to the log database 140, the request to access the second log in response to receiving a query request from the user for the second log.

FIG. 8 is a schematic block diagram of an apparatus 800 for data transmission according to other embodiments of the present disclosure. The apparatus 800 may be implemented at the server 120 of the content delivery network in FIG. 1. The modules/components in the apparatus 800 may be implemented by hardware, software, firmware, or any combination thereof.

As shown in FIG. 8, the apparatus 800 includes a first script receiving module 810, a script distributing module 820, a first log receiving module 830, and a first log providing module 840. The first script receiving module 810 is configured to receive a target orchestration script from the client device 110, where the target orchestration script includes an instruction to be executed by the content delivery network. The script distributing module 820 is configured to distribute the target orchestration script to a plurality of edge devices in the content delivery network. The first log receiving module 830 is configured to receive a first log of the target orchestration script executed in a corresponding trusted execution environment of the plurality of edge devices from the plurality of edge devices. The first log providing module 840 is configured to provide the first log to the client device 110.

In some embodiments, the apparatus 800 may include a call receiving module configured to receive the target orchestration script through the secure file transfer protocol or the application programming interface call.

In some embodiments, the apparatus 800 may include an encrypted script receiving module configured to receive an encrypted target orchestration script. The apparatus 800 may further include a first decryption module configured to decrypt the received target orchestration script.

In some embodiments, the apparatus 800 may include a first verification module configured to: receive, from the client device 110, a request for transmitting the target orchestration script; perform a first verification on an identity of a user of the client device 110; and in response to the first verification being successful, send, to the client device 110, a response to the request for transmitting the target orchestration script.

In some embodiments, the apparatus 800 may include a first access request receiving module configured to receive, from the client device 110, a request to access the first log. The first log providing module 840 is further configured to: in response to receiving the request to access the first log, provide the first log to the client device 110.

In some embodiments, the apparatus 800 may include a second verification module configured to perform the second verification on the received target orchestration script. The script distributing module 820 is further configured to distribute the target orchestration script to the plurality of edge devices in response to the second verification being successful.

In some embodiments, the apparatus 800 may include a script format conversion module configured to convert the received target orchestration script into a script having a format suitable for the plurality of edge devices to execute. The script distributing module 820 is further configured to distribute the converted target orchestration script to the plurality of edge devices.

In some embodiments, the script distributing module 820 is further configured to transmit multiple copies of the target orchestration script to the edge devices, respectively.

In some embodiments, the script distributing module 820 is further configured to distribute the target orchestration script to the plurality of edge devices through the secure file transfer protocol.

In some embodiments, the apparatus 800 may include a second script encryption module configured to encrypt the target orchestration script. The script distributing module 820 is further configured to distribute the encrypted target orchestration script to the plurality of edge devices.

In some embodiments, the first log receiving module 830 is configured to receive an encrypted first log.

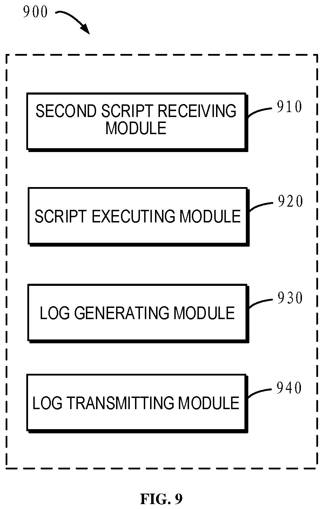

FIG. 9 is a schematic block diagram of an apparatus 900 for data transmission according to still other embodiments of the present disclosure. The apparatus 900 may be implemented at the edge device 130 of the content delivery network in FIG. 1. The modules/components in the apparatus 900 may be implemented by hardware, software, firmware, or any combination thereof.

As shown in FIG. 9, the apparatus 900 includes a second script receiving module 910, a script executing module 920, a log generating module 930, and a log transmitting module 940. The second script receiving module 910 is configured to receive a target orchestration script from the server 120 of the content delivery network, where the target orchestration script includes an instruction to be executed by the content delivery network. The script executing module 920 is configured to execute the target orchestration script in the trusted execution environment. The log generating module 930 is configured to generate, in the trusted execution environment, a first log of the target orchestration script executed. The log transmitting module 940 is configured to transmit the first log to the server.

In some embodiments, the second script receiving module 910 is further configured to receive an encrypted target orchestration script. The apparatus 900 may further include a second decryption module configured to decrypt the received target orchestration script.

In some embodiments, the apparatus 900 may include a first log transmitting module configured to transmit the first log to the log database 140.

In some embodiments, the apparatus 900 may include a first log encryption module configured to encrypt the first log. The first log transmitting module is further configured to transmit the encrypted first log.

In some embodiments, the script executing module 920 is further configured to execute the target orchestration script in the trusted execution environment by the trusted script engine.

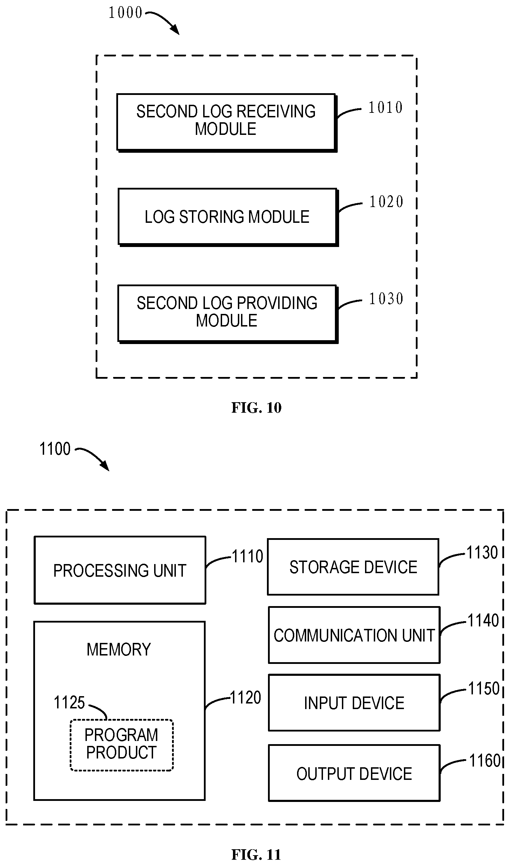

FIG. 10 is a schematic block diagram of an apparatus 1000 for data transmission according to yet other embodiments of the present disclosure. The apparatus 1000 may be implemented at the log database 140 in FIG. 1. The modules/components in the apparatus 1000 may be implemented by hardware, software, firmware, or any combination thereof.

As shown in FIG. 10, the apparatus 1000 includes a second log receiving module 1010, a log storing module 1020, and a second log providing module 1030. The second log receiving module 1010 is configured to receive first logs of the target orchestration script executed in a corresponding trusted execution environment of a plurality of edge devices in the content delivery network from the plurality of edge devices. The log storing module 1020 is configured to store the received first logs in chronological order. The second log providing module 1030 is configured to provide a second log of at least one orchestration script executed in the corresponding trusted execution environment of the plurality of edge devices to the client device 110, where the at least one orchestration script is provided by the client device 110, and the at least one orchestration script includes the target orchestration script.

In some embodiments, the apparatus 1000 may include a reception log encryption module configured to encrypt the received first log. The log storing module 1020 is further configured to store the encrypted first log.

In some embodiments, the log storing module 1020 is further configured to store the first log that cannot be changed.

In some embodiments, the apparatus 1000 may include a second access request receiving module configured to receive, from the client device 110, a request to access the second log. The second log providing module 1030 is further configured to: in response to receiving the request to access the second log, provide the second log to the client device 110.

FIG. 11 is a block diagram of an electronic device 1100 in which one or more embodiments of the present disclosure can be implemented. The electronic device 1100 shown in FIG. 11 is only exemplary and does not constitute any limitation on the functionality and scope of the embodiments described herein.

As shown in FIG. 11, the electronic device 1100 is in the form of a general-purpose electronic device. Components of the electronic device 1100 may include, but are not limited to, one or more processors or processing units 1110, a memory 1120, a storage device 1130, one or more communication units 1140, one or more input devices 1150, and one or more output devices 1160. The processing unit 1110 may be a physical or virtual processor and can execute various processes according to programs stored in the memory 1120. In a multiprocessor system, multiple processing units execute computer-executable instructions in parallel to improve the parallel processing capability of the electronic device 1100.

The electronic device 1100 typically includes multiple computer storage medium. Such medium may be any available medium accessible by the electronic device 1100, including but not limited to volatile and non-volatile medium, and detachable and non-detachable medium. The memory 1120 may be a volatile memory (for example, a register, a cache, a random access memory (RAM)), a non-volatile memory (for example, a read-only memory (ROM), an electrically erasable programmable read-only memory (EEPROM), a flash memory), or any combination thereof. The storage device 1130 may be a detachable or non-detachable medium, and may include a machine-readable medium, such as a flash drive, a disk, or any other medium, which may be capable of storing information and/or data (for example, training data for training) and accessible within the electronic device 1100.

The electronic device 1100 may further include additional detachable/non-detachable, volatile/non-volatile storage media. Although not shown in FIG. 11, it is possible to provide a disk drive for reading from or writing to a detachable, non-volatile disk (for example, a "floppy disk"), and an optical disk drive for reading from or writing to a detachable, non-volatile optical disk. In these cases, each drive may be connected to a bus (not shown) through one or more data medium interfaces. The memory 1120 may include a computer program product 1125 having one or more program modules configured to perform various methods or actions of various embodiments of the present disclosure.

The communication unit 1140 implements communication with other electronic devices through a communication medium. Additionally, the functions of the components of the electronic device 1100 may be implemented in a single computing cluster or multiple computing machines that can communicate through communication connections. Thus, the electronic device 1100 may operate in a networked environment using a logical connection with one or more other servers, a network personal computer (PC), or another network node.

The input device 1150 may be one or more input devices, such as a mouse, a keyboard, a trackball, etc. The output device 1160 may be one or more output devices, such as a display, a speaker, a printer, etc. The electronic device 1100 may further communicate, as required, with one or more external devices (not shown) through the communication unit 1140, such as storage devices, display devices, etc., communicate with one or more devices that enable the user to interact with the electronic device 1100, or communicate with any device (such as a network card, a modem, etc.) that enables the electronic device 1100 to communicate with one or more other electronic devices. Such communication may be performed via an input/output (I/O) interface (not shown).

According to an example implementation of the present disclosure, a computer-readable storage medium is provided, on which one or more computer instructions are stored, and the one or more computer instructions are executed by a processor to implement the method described above.

Various aspects of the present disclosure are described herein with reference to flowcharts and/or block diagrams of methods, apparatuses (systems), and computer program products implemented according to the present disclosure. It should be understood that each block of the flowchart and/or block diagram and a combination of blocks in the flowchart and/or block diagram may be executed by computer-readable program instructions.

These computer-readable program instructions may be provided to a processing unit of a general-purpose computer, a special-purpose computer, or other programmable data processing apparatus to produce a machine, which, when executing these instructions through the processing unit of the computer or other programmable data processing apparatus, generates a device for implementing the functions/actions specified in one or more blocks of the flowchart and/or block diagram. These computer-readable program instructions may also be stored in a computer-readable storage medium, and these instructions cause the computer, the programmable data processing apparatus, and/or other devices to work in a specific way. Therefore, the computer-readable medium storing the instructions includes a product, which includes instructions for implementing various aspects of the functions/actions specified in one or more blocks of the flowchart and/or block diagram.

The computer-readable program instructions may also be loaded onto a computer, other programmable data processing apparatus, or other device, causing a series of operational steps to be performed on the computer, other programmable data processing apparatus, or other device to produce a computerimplemented process, such that the instructions which, when executed on the computer, other programmable data processing apparatus, or other device, implement the functions/actions specified in one or more blocks of the flowchart and/or block diagram.

The flowcharts and block diagrams in the drawings show possible architectures, functionalities, and operations of systems, methods, and computer program products according to multiple implementations of the present disclosure. In this regard, each block in the flowcharts or block diagrams may represent a module, a program segment, or part of an instruction, where the module, the program segment, or the part of the instruction includes one or more executable instructions for implementing specified logical functions. In some alternative implementations, the functions noted in the blocks may also occur out of the order noted in the drawings. For example, two consecutive blocks may, in fact, be executed substantially concurrently, or the blocks may sometimes be executed in a reverse order, depending upon the functionality involved. It is also noted that each block of the block diagrams and/or flowcharts, and combinations of blocks in the block diagrams and/or flowcharts, may be implemented by a dedicated hardware-based system that performs the specified functions or actions, or may be implemented by a combination of dedicated hardware and computer instructions.

Various implementations of the present disclosure have been described above, and the above description is exemplary, not exhaustive, and is not limited to the disclosed implementations. Many modifications and changes are obvious to those of ordinary skill in the art without departing from the scope and spirit of the described implementations. The selection of terms used herein is intended to best explain the principles, practical applications, or improvements of the technology in the market, or to enable other ordinary skilled in the art to understand the implementations disclosed herein.

## Claims

1. A method (300) for data transmission in a content delivery network, comprising:
generating (310), at a client device, a target orchestration script comprising an instruction to be executed by the content delivery network;
transmitting (320) the target orchestration script to a server of the content delivery network;
sending, to the server, a request to access a first log; and
obtaining (330), from the server, the first log of the target orchestration script executed in a corresponding trusted execution environment of a plurality of edge devices in the content delivery network;
wherein obtaining the first log comprises:
obtaining the first log from the server in response to sending the request to access the first log; and
obtaining, from a log database, a second log of at least one orchestration script executed in the corresponding trusted execution environment of the plurality of edge devices.

2. The method (300) according to claim 1, wherein the target orchestration script is transmitted to the server through a secure file transfer protocol or an application programming interface call.

3. The method (300) according to claim 1, further comprising:
sending, to the server, a request for transmitting the target orchestration script; and
receiving, from the server, a response for transmitting the target orchestration script.

4. The method (300) according to claim 1, wherein the at least one orchestration script is provided by the client device, and the at least one orchestration script comprises the target orchestration script.

5. The method (300) according to claim 4, further comprising:
sending, to the log database, a request to access the second log,
wherein obtaining the second log comprises:
obtaining the second log from the log database in response to sending the request to access the second log.

6. A method (400) for data transmission in a content delivery network, comprising:
receiving (410), at a server of the content delivery network, a target orchestration script from a client device, the target orchestration script comprising an instruction to be executed by the content delivery network;
distributing (420) the target orchestration script to a plurality of edge devices in the content delivery network;
receiving (430), from the plurality of edge devices, a first log of the target orchestration script executed in a corresponding trusted execution environment of the plurality of edge devices;
receiving, from the client device, a request to access the first log; and
providing (440) the first log to the client device;
wherein providing the first log comprises:
providing, in response to receiving the request to access the first log, the first log to the client device; and
wherein distributing the target orchestration script to the plurality of edge devices comprises:
transmitting a plurality of copies of the target orchestration script to the edge devices, respectively.

7. The method (400) according to claim 6, further comprising:
receiving, from the client device, a request for transmitting the target orchestration script;
performing a first verification on an identity of a user of the client device; and
in response to the first verification being successful, sending, to the client device, a response for transmitting the target orchestration script.

8. The method (400) according to claim 6, further comprising:
performing a second verification on the received target orchestration script, wherein distributing the target orchestration script to the plurality of edge devices comprises: in response to the second verification being successful, distributing the target orchestration script to the plurality of edge devices; or
converting the received target orchestration script into a script having a format suitable for execution at the plurality of edge devices, wherein distributing the target orchestration script to the plurality of edge devices comprises: distributing the converted target orchestration script to the plurality of edge devices.

9. A method (500) for data transmission in a content delivery network, comprising:
receiving (510), at an edge device of the content delivery network, a target orchestration script from a server of the content delivery network, the target orchestration script comprising an instruction to be executed by the content delivery network;
executing (520) the target orchestration script in a trusted execution environment;
generating (530), in the trusted execution environment, a first log for execution of the target orchestration script;
transmitting (540) the first log to the server; and
transmitting the first log to a log database.

10. The method according to claim 9, wherein the target orchestration script is executed in the trusted execution environment by a trusted script engine.

11. An apparatus (700) for data transmission in a content delivery network, comprising:
a script generating module (710) configured to generate a target orchestration script, the target orchestration script comprising an instruction to be executed by the content delivery network;
a script transmitting module (720) configured to transmit the target orchestration script to a server of the content delivery network;
a log obtaining module (730) configured to obtain, from the server, a first log of the target orchestration script executed in a corresponding trusted execution environment of a plurality of edge devices in the content delivery network; and
a first log access module configured to send, to the server, a request to access the first log;
the log obtaining module is further configured to obtain the first log from the server in response to sending the request to access the first log; and further configured to obtain, from the log database, a second log of at least one orchestration script executed in the corresponding trusted execution environment of the plurality of edge devices.

12. An apparatus (800) for data transmission in a content delivery network, comprising:
a first script receiving module (810) configured to receive, from a client device, a target orchestration script, the target orchestration script comprising an instruction to be executed by the content delivery network;
a script distributing module (820) configured to distribute the target orchestration script to a plurality of edge devices in the content delivery network;
a first log receiving module (830) configured to receive, from the plurality of edge devices, a first log of the target orchestration script executed in a corresponding trusted execution environment of the plurality of edge devices;
a first access request receiving module configured to receive, from the client device, a request to access the first log; and
a first log providing module (840) configured to provide the first log to the client device;
the first log providing module (840) is further configured to provide, in response to receiving the request to access the first log, the first log to the client device;
the script distributing module (820) is further configured to transmit a plurality of copies of the target orchestration script to the edge devices, respectively.

13. An apparatus (900) for data transmission in a content delivery network, comprising:
a second script receiving module (910) configured to receive, from a server of the content delivery network, a target orchestration script, the target orchestration script comprising an instruction to be executed by the content delivery network;
a script executing module (920) configured to execute the target orchestration script in a trusted execution environment;
a log generating module (930) configured to generate, in the trusted execution environment, a first log for execution of the target orchestration script;
a log transmitting module (940) configured to transmit the first log to the server; and
a first log transmitting module configured to transmit the first log to the log database.

14. An electronic device (1100), comprising:
at least one processing unit (1110); and
at least one memory (1120) coupled to the at least one processing unit (1110) and storing instructions executable by the at least one processing unit (1110), wherein the instructions, when executed by the at least one processing unit (1110), cause the device to perform the method according to any of claims 1 to 5, the method according to any of claims 6 to 8, or the method according to any of claims 9 to 10.

15. A computer-readable storage medium having stored thereon a computer program that, when executed by a processor, implements the method according to any of claims 1 to 5, the method according to any of claims 6 to 8, or the method according to any of claims 9 to 10.
